# EUROPEAN PATENT SPECIFICATION

(11) **EP 4 387 331 B1**
(45) Date of publication and mention of the grant of the patent: **26.11.2025**
(21) Application number: 23794654.6
(22) Date of filing: 04.01.2023
(51) Int. Cl.: H04W 48/02, H04W 48/18, H04W 60/04, H04W 88/06

(54) **COMMUNICATION METHOD AND ELECTRONIC DEVICE**
KOMMUNIKATIONSVERFAHREN UND ELEKTRONISCHE VORRICHTUNG
PROCÉDÉ DE COMMUNICATION ET DISPOSITIF ÉLECTRONIQUE

(30) Priority: 24.04.2022 CN 202210454773
(43) Date of publication of application: 19.06.2024
(73) Proprietor: Honor Device Co., Ltd., Shenzhen, Guangdong 518040 (CN)
(72) Inventor: CHEN, Shuanfeng, Shenzhen, Guangdong 518040 (CN); LUO, Fei, Shenzhen, Guangdong 518040 (CN); ZHANG, Zhongli, Shenzhen, Guangdong 518040 (CN); MU, Danian, Shenzhen, Guangdong 518040 (CN); WANG, Lei, Shenzhen, Guangdong 518040 (CN)
(74) Representative: Epping - Hermann - Fischer
(86) International application number: PCT/CN2023/070294
(87) International publication number: WO 2023/207214

(56) References cited:
- WO-A1-2021/087413
- WO-A1-2021/261843
- CN-A- 113 099 496
- CN-A- 113 573 377
- CN-A- 114 258 090
- CN-A- 114 916 035
- US-A1- 2021 105 691
- US-A1- 2021 136 645
- US-A1- 2021 329 714
- CHINA UNICOM: "Support of EPS fallback-23.501", SA WG2 MEETING #122BIS, S2-175486, 15 August 2017 (2017-08-15), XP051334983

## Description

This application claims priority to Chinese Patent Application No. 202210454773.1, filed with the China National Intellectual Property Administration on April 24, 2022 and entitled "COMMUNICATIONS METHOD AND ELECTRONIC DEVICE".

### TECHNICAL FIELD

This application relates to the field of communications technologies, and in particular, to a communications method and an electronic device.

### BACKGROUND

A 5G mobile communications network is a latest generation of mobile communications technology. Compared with earlier mobile communications technologies such as 4G, 3G, and 2G, 5G can provide a higher data transmission rate. A radio access technology of a 4G mobile communications network is long term evolution (Long Term Evolution, LTE), and a voice call service carried over LTE is referred to as VoLTE. A radio access technology of the 5G mobile communications network is new radio (New Radio, NR), and a voice call service carried over NR is referred to as VoNR. VoNR is used as a final voice service solution for 5G SA (StandAlone, standalone). However, in an early stage of 5G SA construction, VoNR is not fully commercialized, and an EPS Fallback call solution is used. Voice communication based on EPS Fallback needs to fall back from 5G mobile communication to 4G mobile communication and re-camp on a network to use VoLTE to carry a voice service. According to field trial, voice communication based on EPS Fallback has a higher failure rate than that based on VoLTE.

Therefore, in the early stage of 5G SA construction, how to balance a success rate of voice communication and a data transmission rate is a problem that needs to be resolved urgently.

US 2021/105691 A1 relates to wireless devices and mor particularly to techniques for handover of WLAN voice calls to one or more cellular networks.

US 2021/0329714 A1 relates to wireless communications and more specifically to methods to handle slicing accounting for evolved packet data gateway Wi-Fi access.

### SUMMARY

To resolve the foregoing technical problem, embodiments of this application provide a communications method and an electronic device. In the communications method, a 5G SA mode of the electronic device is disabled, so that the electronic device registers in a 4G mobile communications network, performs voice communication based on VoLTE, and performs data communication based on a Wi-Fi connection, to avoid Eps fallback type voice communication, thereby reducing a failure rate of a voice call, and ensuring good Internet access experience of a user. The invention is set out in the appended claims.

According to a first aspect, an embodiment of this application provides a communications method. The communications method is applied to an electronic device, and the electronic device registers in 5G SA. The communications method includes: When a Wi-Fi status of the electronic device changes, the electronic device disables a 5G SA mode of the electronic device if Wi-Fi is available and a Wi-Fi signal strength is higher than a first threshold, and the electronic device does not support Voice over New Radio, VoNR, wherein Wi-Fi being available and the Wi-Fi signal strength being higher than the first threshold indicates a good Wi-Fi signal and the Wi-Fi being available and the Wi-Fi signal strength not being higher than the first threshold indicates a poor Wi-Fi signal. The electronic device completes registration in a 4G mobile communications network.

Once the 5G SA mode of the electronic device is disabled, the electronic device cannot register in a 5G mobile communications network. Then, the electronic device may register in a 4G mobile communications network. In this case, the electronic device can establish a voice call through VoLTE, thereby avoiding Eps fallback type voice communication, and reducing a failure rate of voice communication. In this way, a success rate of the voice call can be ensured, a user can have good Internet access experience based on WI-FI communication, and a balance between calling and Internet access is implemented.

According to the first aspect, in the communications method, the disabling the 5G SA mode of the electronic device if Wi-Fi is available, the Wi-Fi signal strength is higher than the first threshold may include: If Wi-Fi is available, the Wi-Fi signal strength is higher than the first threshold, the electronic device does not support VoNR, and a 5G cell on which the electronic device currently camps is not a 5G cell whose 4G neighboring cell is abnormal, the electronic device disables the 5G SA mode of the electronic device.

If the electronic device supports VoNR, the electronic device may establish a call through VoNR. When the electronic device supports VoNR, Eps fallback type voice communication may be avoided. Therefore, when the electronic device supports VoNR, the 5G SA mode of the electronic device does not need to be disabled to adjust a mobile communications network of the electronic device.

If the 5G cell on which the electronic device currently camps is a 5G cell whose 4G neighboring cell is abnormal, the electronic device cannot complete registration in a 4G mobile communications network. Therefore, when the 5G cell on which the electronic device currently camps is a 5G cell whose 4G neighboring cell is abnormal, if the 5G SA mode of the electronic device is disabled, the electronic device exits a 5G mobile communications network, and the electronic device cannot successfully register in a 4G mobile communications network.

In this way, when the electronic device does not support VoNR, and the 5G cell on which the electronic device currently camps is not a 5G cell whose 4G neighboring cell is abnormal, the 5G SA mode of the electronic device is disabled, so that accuracy of adjusting the mobile communications network of the electronic device is ensured, and a problem of an adjustment failure or affecting user experience after adjustment is avoided.

According to the first aspect or any implementation of the first aspect above, in the communications method, if Wi-Fi is available, the Wi-Fi signal strength is higher than the first threshold, the electronic device does not support VoNR, the 5G cell on which the electronic device currently camps is not a 5G cell whose 4G neighboring cell is abnormal, and the electronic device is in a target mode, the electronic device disables the 5G SA mode of the electronic device. The target mode is used to indicate that a user is insensitive to a mobile communications network in which the electronic device registers.

For example, the target mode may be a simple mode or an elderly-oriented mode. In this way, the 5G SA mode of the electronic device is disabled only when the electronic device is in the target mode, so that user experience is not affected, that is, a psychological sense of the user on the mobile communications network of the electronic device is not affected.

According to the first aspect or any implementation of the first aspect above, in the communications method, if Wi-Fi is available, the Wi-Fi signal strength is higher than the first threshold, the electronic device does not support VoNR, the 5G cell on which the electronic device currently camps is not a 5G cell whose 4G neighboring cell is abnormal, and an NR signal strength of the electronic device is lower than a second threshold, the electronic device disables the 5G SA mode of the electronic device.

In this way, the 5G SA mode of the electronic device is disabled only when the NR signal strength of the electronic device is lower than the second threshold, so that the electronic device re-camps on a 4G mobile communications network, which increases a success rate of a voice call as compared with starting the 5G SA mode.

According to the first aspect or any implementation of the first aspect above, in the communications method, if Wi-Fi is available, the Wi-Fi signal strength is higher than the first threshold, the electronic device does not support VoNR, the 5G cell on which the electronic device currently camps is not a 5G cell whose 4G neighboring cell is abnormal, the electronic device is in the target mode, and the NR signal strength of the electronic device is lower than the second threshold, the electronic device disables the 5G SA mode of the electronic device.

According to the first aspect or any implementation of the first aspect above, the communications method further includes: If the electronic device does not successfully register in the 4G mobile communications network, the electronic device restarts the 5G SA mode of the electronic device. After the electronic device restarts the 5G SA mode, the electronic device re-registers in a 5G mobile communications network, thereby avoiding a problem that the electronic device does not have an available mobile communications network.

According to the first aspect or any implementation of the first aspect above, the communications method further includes: If the electronic device does not successfully register in the 4G mobile communications network, the electronic device marks a target 5G cell as a 5G cell whose 4G neighboring cell is abnormal. The target 5G cell is a 5G cell on which the electronic device camps before disabling the 5G SA mode.

In this way, the 5G cell whose 4G neighboring cell is abnormal is marked, based on which the electronic device may determine whether to disable the 5G SA mode, thereby avoiding a problem that the electronic device does not have an available mobile network after disabling the 5G SA mode.

According to the first aspect or any implementation of the first aspect above, after the electronic device completes the registration in the 4G mobile communications network, the communications method further includes: If Wi-Fi is unavailable or the Wi-Fi signal strength is not higher than the first threshold, the electronic device restarts the 5G SA mode of the electronic device.

In this way, once Wi-Fi communication cannot provide good Internet access experience for a user, the 5G SA mode of the electronic device is restarted, so that the electronic device re-registers in a 5G mobile communications network, thereby ensuring fluent Internet access experience of the user. According to a second aspect, an embodiment of this application provides an electronic device. The electronic device includes: one or more processors; a memory; and one or more computer programs. The one or more computer programs are stored in the memory, and when the computer program is executed by the one or more processors, the electronic device is enabled to perform the following steps: When a Wi-Fi status of the electronic device changes, the electronic device disables a 5G SA mode of the electronic device if Wi-Fi is available and a Wi-Fi signal strength is higher than a first threshold, and the electronic device does not support VoNR, wherein Wi-Fi being available and the Wi-Fi signal strength being higher than the first threshold indicates a good Wi-Fi signal and the Wi-Fi being available and the Wi-Fi signal strength not being higher than the first threshold indicates a poor Wi-Fi signal. The electronic device completes registration in a 4G mobile communications network.

According to the second aspect, when the computer program is executed by the one or more processors, the electronic device is enabled to perform the following step: If Wi-Fi is available, the Wi-Fi signal strength is higher than the first threshold, the electronic device does not support VoNR, and a 5G cell on which the electronic device currently camps is not a 5G cell whose 4G neighboring cell is abnormal, the electronic device disables the 5G SA mode of the electronic device.

According to the second aspect or any implementation of the second aspect above, when the computer program is executed by the one or more processors, the electronic device is enabled to perform the following step: If Wi-Fi is available, the Wi-Fi signal strength is higher than the first threshold, the electronic device does not support VoNR, the 5G cell on which the electronic device currently camps is not a 5G cell whose 4G neighboring cell is abnormal, and the electronic device is in a target mode, the electronic device disables the 5G SA mode of the electronic device. The target mode is used to indicate that a user is insensitive to a mobile communications network in which the electronic device registers.

According to the second aspect or any implementation of the second aspect above, when the computer program is executed by the one or more processors, the electronic device is enabled to perform the following step: If Wi-Fi is available, the Wi-Fi signal strength is higher than the first threshold, the electronic device does not support VoNR, the 5G cell on which the electronic device currently camps is not a 5G cell whose 4G neighboring cell is abnormal, and an NR signal strength of the electronic device is lower than a second threshold, the electronic device disables the 5G SA mode of the electronic device.

According to the second aspect or any implementation of the second aspect above, when the computer program is executed by the one or more processors, the electronic device is enabled to perform the following step: If Wi-Fi is available, the Wi-Fi signal strength is higher than the first threshold, the electronic device does not support VoNR, the 5G cell on which the electronic device currently camps is not a 5G cell whose 4G neighboring cell is abnormal, the electronic device is in the target mode, and the NR signal strength of the electronic device is lower than the second threshold, the electronic device disables the 5G SA mode of the electronic device.

According to the second aspect or any implementation of the second aspect above, when the computer program is executed by the one or more processors, the electronic device is enabled to further perform the following step: If the electronic device does not successfully register in the 4G mobile communications network, the electronic device restarts the 5G SA mode of the electronic device.

According to the second aspect or any implementation of the second aspect above, when the computer program is executed by the one or more processors, the electronic device is enabled to further perform the following step: If the electronic device does not successfully register in the 4G mobile communications network, the electronic device marks a target 5G cell as a 5G cell whose 4G neighboring cell is abnormal. The target 5G cell is a 5G cell on which the electronic device camps before disabling the 5G SA mode.

According to the second aspect or any implementation of the second aspect above, when the computer program is executed by the one or more processors, the electronic device is enabled to further perform the following step: After the electronic device completes the registration in the 4G mobile communications network, if Wi-Fi is unavailable or the Wi-Fi signal strength is not higher than the first threshold, the electronic device restarts the 5G SA mode of the electronic device. The second aspect and any implementation of the second aspect respectively correspond to the first aspect and any implementation of the first aspect. For technical effects corresponding to the second aspect and any implementation of the second aspect, refer to the technical effects corresponding to the first aspect and any implementation of the first aspect. Details are not described herein again.

According to a third aspect, an embodiment of this application provides a computer-readable storage medium. The computer-readable storage medium includes a computer program. When the computer program is run on an electronic device, the electronic device is enabled to perform the communications method in the first aspect and any implementation of the first aspect.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again. According to a fourth aspect, an embodiment of this application provides a computer program product, including a computer program. When the computer program is run, a computer is enabled to perform the communications method in the first aspect and any implementation of the first aspect.

The fourth aspect and any implementation of the fourth aspect respectively correspond to the first aspect and any implementation of the first aspect. For technical effects corresponding to the fourth aspect and any implementation of the fourth aspect, refer to the technical effects corresponding to the first aspect and any implementation of the first aspect. Details are not described herein again. According to a fifth aspect, this application provides a chip. The chip includes a processing circuit and a transceiver pin. The transceiver pin and the processing circuit communicate with each other through an internal connection path, and the processing circuit performs the communications method in the first aspect or any implementation of the first aspect, to control a receiving pin to receive a signal, or control a sending pin to send a signal.

The fifth aspect and any implementation of the fifth aspect respectively correspond to the first aspect and any implementation of the first aspect. For technical effects corresponding to the fifth aspect and any implementation of the fifth aspect, refer to the technical effects corresponding to the first aspect and any implementation of the first aspect. Details are not described herein again.

### BRIEF DESCRIPTION OF DRAWINGS

FIG. 1A is a schematic diagram of an example implementation of 5G SA networking;
FIG. 1B is a schematic diagram of an example implementation of 5G SA networking;
FIG. 2 is a schematic diagram of network elements related to an EPS Fallback service of a 5G SA network;
FIG. 3 is an example schematic flowchart of an EPS Fallback service;
FIG. 4 is a schematic diagram of an example hardware structure of an electronic device;
FIG. 5 is a schematic diagram of an example software structure of an electronic device;
FIG. 6A and FIG. 6B are a flowchart of a communications method according to an embodiment of this application;
FIG. 7 is a flowchart of a communications method according to an embodiment of this application; and
FIG. 8 is a flowchart of a communications method according to an embodiment of this application.

### DESCRIPTION OF EMBODIMENTS

The following clearly describes technical solutions in embodiments of this application with reference to accompanying drawings in embodiments of this application. Apparently, the described embodiments are some but not all embodiments of this application.

The term "and/or" in this specification describes only an association relationship for describing associated objects and represents that three relationships may exist. For example, A and/or B may represent the following three cases: Only A exists, both A and B exist, and only B exists.

The terms "first", "second", and the like in the specification of embodiments of this application and the claims are intended to distinguish between different objects, rather than indicate a specific order between the objects. For example, a first target object and a second target object are intended to distinguish between different target objects, rather than describe a specific order between the target objects.

In embodiments of this application, the word such as "example" or "for example" is used to represent giving an example, an illustration, or a description. Any embodiment or design scheme described as an "exemplary" or "for example" in the embodiments of this application should not be explained as being more preferred or having more advantages than another embodiment or design scheme. Exactly, use of the word such as "example" or "for example" is intended to present a relative concept in a specific manner.

In descriptions of embodiments of this application, unless otherwise stated, "a plurality of" means two or more than two. For example, a plurality of processing units are two or more processing units, and a plurality of systems are two or more systems.

5G is a latest generation of mobile communications technology. Compared with earlier mobile communications technologies such as 4G, 3G, and 2G, 5G can provide a higher data transmission rate, a lower latency, full connectivity of the Internet of everything, more energy savings, lower costs, a higher system capacity, and large-scale device access.

5G NR is a new radio access technology, developed by the 3rd generation partnership project (3rd generation partnership project, 3GPP), and applied to a 5G mobile communications network, and is a global standard for air interfaces of 5G networks.

Currently, a networking mode of a 5G system includes 5G NSA (Non-Standalone, non-standalone) and 5G SA (standalone). In the 5G NSA networking mode, a 4G base station and a 4G core network need to be used, so that 4G is used as a control plane anchor to meet a need of an aggressive operator to use an existing LTE network resource to implement rapid deployment of 5G NR. SA networking is independent of a 4G network, and a new network needs to be constructed.

An existing standard defines a plurality of networking modes, including a plurality of possible networking modes such as 5G Option 1, 5G Option 2, 5G Option 3/3a, 5G Option 4/4a, 5G Option 5, 5G Option 6, 5G Option 7/7a, and 5G Option 8/8a. Some are SA networking modes, and some are NSA networking modes.

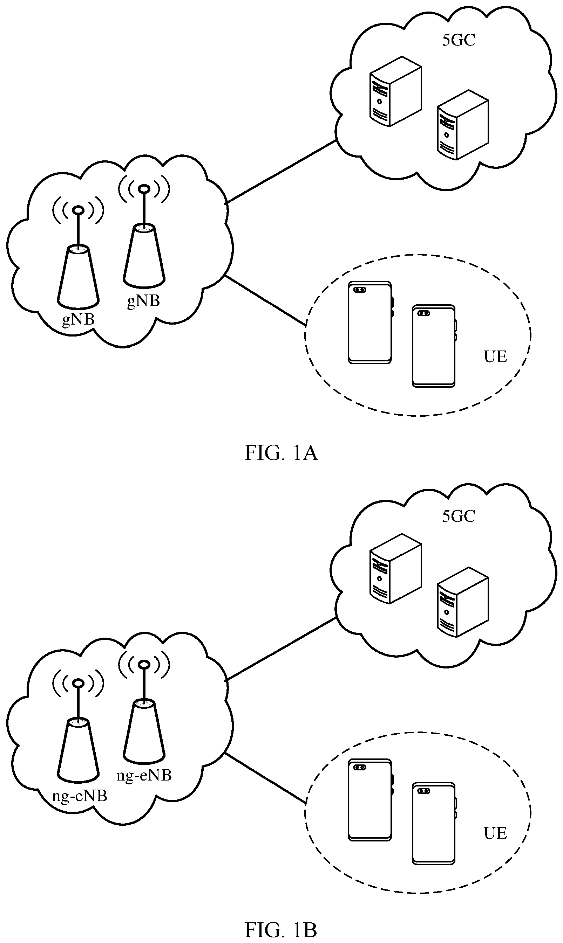

5G Option 2 networking is an implementation of 5G SA networking, and a gNB directly accesses a 5GC (5G Core Network, 5G core network). For details, refer to FIG. 1A. 5G Option 5 networking is an implementation of 5G SA networking. The networking mainly evolves from LTE networking. As a 5GC is deployed, after an eNB originally accessing a 4G core network EPC (Evolved Packet Core, evolved packet core) is upgraded to an ng-eNB, the ng-eNB accesses the 5GC. For details, refer to FIG. 1B.

Currently, 3GPP has made it clear that a 5G SA mobile communications network follows a voice architecture of a 4G mobile communications network and provides a voice service still based on an IMS (IP Multimedia Subsystem). A radio access technology of the 4G mobile communications network is LTE, and a voice call service carried over 4G is referred to as voice over LTE (VoLTE). A radio access technology of the 5G mobile communications network is NR described above, and a voice call service carried over NR is referred to as voice over NR (VoNR). VoNR is used as a final voice service solution for 5G SA. In an early stage of 5G SA construction, 5G NR may not provide a voice service. Therefore, the voice service needs to be implemented based on VoLTE. That is, when UE camping on NR initiates a call, the call needs to fall back to 4G through EPS Fallback, and VoLTE is used to carry the voice service. It can be learned that, in the early stage of 5G SA system construction, VoLTE and VoNR exist as different access manners to a 5G IMS voice service.

The following briefly describes a procedure of the EPS Fallback call with reference to an accompanying drawing.

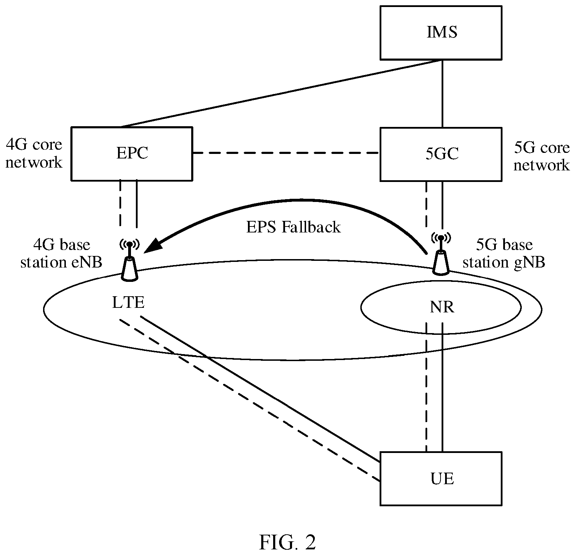

FIG. 2 is a schematic diagram of network elements related to an EPS Fallback service of a 5G SA network. As shown in FIG. 2, VoNR is carried by a 5G core network SGC and a 5G access network NG-RAN (for example, a gNB base station), and related network elements include: user equipment UE, the NG-RAN, the 5GC, and an IMS. VoLTE is carried by a 4G core network EPC and a 4G access network E-UTRAN (for example, an eNB base station). Therefore, the EPS Fallback service further includes the EPC and the E-UTRAN, in addition to the network elements related to VoNR.

Network elements in the SGC related to the VoNR service may include, for example, an AMF (Access and Mobility Management Function, access and mobility management function) network element, an SMF (Session Management Function, session management function) network element, a UPF (User plane Function, user plane function) network element, and a PCF (Policy Control Function, policy control function) network element.

The AMF network element is configured to process a control plane message of the network, whose functions include, for example, access network control plane processing, registration management, connection management, accessibility management, mobility management, lawful information interception, providing some special session management messages to the SMF, access authentication and authorization, a security anchor function SEAF, location service management, allocating an EPS bearer ID during interaction with a 4G system EPS, UE mobility event notification, optimization of control plane data transmission in a 5G IoT, and providing an external configuration parameter.

The SMF network element is configured to implement session management, whose functions include, for example, session establishment, modification, and release, maintenance of a channel between the UPF and an access network node, allocation and management of a UE IP address, selection and control of a user plane function, configuration of a correct service route on the UPF, implementation of a policy control function, collection of billing data, and providing a billing interface.

The UPF network element is configured to provide user plane functions, whose functions include, for example, intra-system/inter-system mobility anchoring, allocating a UE IP address based on a request of the SMF, serving as a PDN session node to interface with an external data network, packet routing/forwarding, packet inspection, user plane policy execution, lawful interception, service usage reporting, user plane QoS processing, uplink service verification (mapping from a service data flow (SDF) to a QoS flow), uplink and downlink transport layer packet marking, downlink packet buffering and downlink data indicator triggering, sending or forwarding an end marker (end marker) (from the SMF) to a source cell after cross-cell handover is completed, and providing a corresponding UE MAC address in response to Ethernet data transmission.

The PCF network element is configured to support a unified policy framework for controlling network behavior, provide a policy rule for control plane execution, and access subscription information that is in a UDR (a user subscription data repository) and that is related to policy formulation.

Network elements in the EPC related to the EPS Fallback service may further include, for example, an MME (Mobility Management Entity, mobility management entity) network element, an SGW (Serving Gateway, serving gateway) network element, and a PGW (PDN gateway, packet data network gateway) network element.

The MME network element is mainly configured for signaling processing and mobility management, whose functions include, for example, processing of NAS signaling and security thereof; tracking area (Tracking Area) list management; selection of a PGW and an SGW, selection of an MME during cross-MME switching; selection of a serving GPRS support node (serving GPRS support node, SGSN) during handover to a 2G/3G access system; authentication, roaming control, and bearer management; mobility management between core network nodes of different 3GPP access networks; and lawful signaling plane interception.

As a gateway facing an S1-U interface (an interface between an eNB and an SGW), the SGW network element accepts MME control and carries user plane data, whose functions include, for example, serving as a local anchor during switching between eNBs, and assisting in completing a reordering function of an eNB; serving as a mobility anchor during handover between different 3GPP access systems; lawful interception and packet routing and forwarding; and PDN and QoS class identifier (QoS class identifier, QCI) related charging for an uplink and a downlink.

The PGW network element is connected to a packet date network (packet date network, PDN), accepts MME control, and carries user plane data, whose functions include, for example, packet routing and forwarding, UE IP address allocation, a gateway function to access an external PDN, user-based packet filtering, lawful interception, a charging and QoS policy execution function, a service-based charging function, packet transmission level marking in an uplink, uplink and downlink service level charging and service level threshold control, and service-based uplink and downlink rate control.

When the 5GC initiates, to the NG-RAN, a request to establish an IMS voice session dedicated bearer QoS Flow, if the NG-RAN does not have a VoNR capability, whether to trigger EPS Fallback may be determined based on an NR capability of the UE, a deployment status of an N26 interface, a radio condition of LTE, and indication information of the AMF (Access and Mobility Management Function, access and mobility management function). If EPS Fallback is triggered, the NG-RAN initiates a redirection or inter-RAT handover request to the SGC and waits for the UE to fall back to the LTE network, and the EPC and the E-UTRAN provide the voice service through VoLTE.

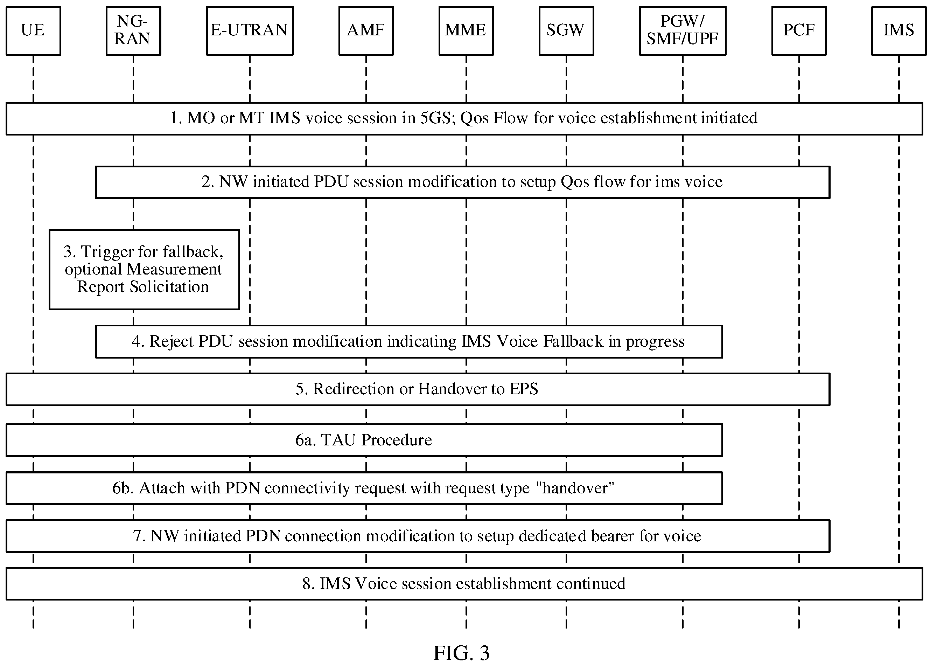

In specific implementation, according to the description of 3GPP technical specification TS 23.502, as shown in FIG. 3, an EPS Fallback procedure may specifically include the following steps:
1. In a call scenario in which the UE is a caller or a callee, the IMS triggers, based on SIP signaling exchange, a procedure of establishing an IMS voice session dedicated bearer QoS Flow (1. MO or MT IMS voice session in 5GS; Qos Flow for voice establishment initiated).
2. A 5GC side initiates a PDU (Protocol Data Unit, protocol data unit) session modification procedure, to initiate, to the access network NG-RAN, a request to establish the dedicated bearer QoS flow (2. NW initiated PDU session modification to setup Qos flow for ims voice).
3. The NG-RAN is configured to support EPS Fallback of IMS voice, and determine, based on a capability of the UE, an indication from the AMF that "redirection of EPS Fallback of the EPS is possible", network configuration (for example, availability configuration of N26), and a radio condition, whether to fall back to 4G. The NG-RAN may initiate an LTE measurement request message to the UE to collect a measurement report. Then, the UE needs to perform LTE cell measurement and send a measurement report to the NG-RAN (3. Trigger for fallback, optional Measurement Report Solicitation).
4. In a case of fallback to 4G, the NG-RAN indicates, to the SGC by using a PDU session response message, that PDU session modification is rejected, and starts an IMS voice fallback procedure, and the SGC waits for the UE to fall back to 4G (4. Reject PDU session modification indicating IMS Voice Fallback in progress).
5. The NG-RAN selects 6a or 6b based on the capability of the UE, the network configuration (for example, the availability configuration of N26), the radio condition, and the like, and hands over the UE to 4G through inter-system handover inter-RAT or redirection (5. Redirection or Handover to EPS).
6a. The UE is handed over from 5G to 4G, or falls back to 4G through inter-system redirection of the N26 interface, and then a tracking area update TAU procedure is started (6a. TAU Procedure).
6b. For a case without inter-system redirection of the N26 interface to 4G, the UE initiates, to the 5GC, an attach with PDN connectivity request whose request type is "handover" (6b. Attach with PDN connectivity request with request type "handover").
7. After the UE completes the fallback to 4G, the EPC (including a converged network element of the SMF/PGW-C) initiates a PDU session modification procedure, to initiate, to the access network E-UTRAN, a request to establish the dedicated bearer QoS flow (7. NW initiated PDN connection modification to setup dedicated bearer for voice).
8. The IMS voice session continues to be established. At least during an LTE voice call, the E-UTRAN is configured not to trigger any handover to 5G (8. IMS Voice session establishment continued).

As described above, processes of an Eps fallback callee include receiving paging, NRRC establishment, 4G cell selection and camping after redirection, a TAU/ATTACH process, voice bearer activation in 4G, SIP interaction, and other processes. An abnormality in any sub-process causes an establishment failure of the callee. In actual application, a problem encountered by the Eps fallback callee includes an establishment failure of the callee caused by a failure to receive paging, receiving paging but receiving no invite message of an incoming call, an NRRC establishment failure, a poor signal in a cell corresponding to a specified frequency of a network, slow TAU causing a timeout of a reserved resource or TAU being rejected, a SIP message sending failure, or the like. For an Eps fallback type caller, there is also a process of falling back from 5G to 4G and re-camping on a network. However, VoLTE has been commercialized for many years and is stable. When a call is established through VoLTE, there is no process of falling back from 5G to 4G and re-camping on a network. Therefore, a failure rate of voice communication of Eps fallback is obviously higher than that of VoLTE.

For voice communication, it is a better choice for a mobile phone to stay on a 4G mobile communications network. However, if the mobile phone camps on a 5G mobile communications network, an overall Internet access speed of the mobile phone is better than that on 4G. Therefore, in an early stage of 5G SA system construction, when a 5G SA network is not stable enough, how to achieve a balance between calling and Internet access is a problem that needs to be resolved urgently.

To resolve the foregoing problem, embodiments of this application provide a communications method. The communications method may be applied to a terminal device UE. In an early stage of 5G SA construction, a success rate of voice communication and a data transmission rate can be balanced, thereby ensuring a success rate of voice communication of a user, and ensuring an Internet access speed of the user.

The terminal device in embodiments of this application may include, for example, a mobile phone, a tablet computer, a wearable device, a handheld game console, or an in-vehicle smart terminal.

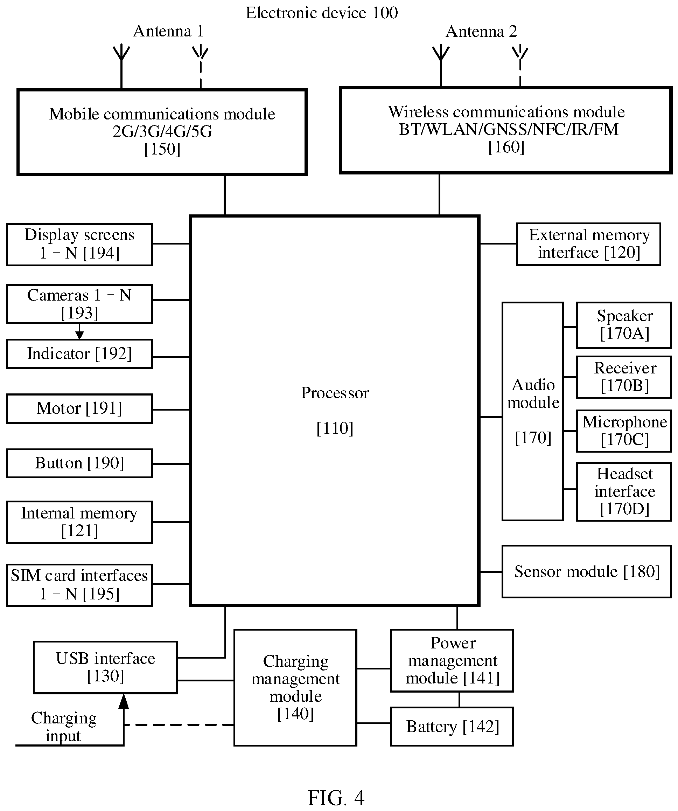

FIG. 4 is a schematic diagram of a structure of an electronic device 100. Optionally, the electronic device 100 may be referred to as a terminal or a terminal device. The terminal may be a wearable electronic device, for example, may be a smartwatch. This is not limited in this application. It should be noted that the schematic diagram of the structure of the electronic device 100 may apply to the mobile phone mentioned above. It should be understood that, the electronic device 100 shown in FIG. 4 is merely an example of an electronic device, and the electronic device 100 may have more or fewer components than those shown in the figure, or two or more components may be combined, or these components may be configured differently. Components shown in FIG. 4 may be implemented by hardware, software, or a combination of hardware and software including one or more signal processors and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a phone receiver 170B, a microphone 170C, a headset interface 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a timing signal, to control instruction fetching and instruction execution.

A memory may be further disposed in the processor 110, to store instructions and data. In some embodiments, the memory in the processor 110 is a cache.

The USB interface 130 is an interface that complies with a USB standard specification, and may be specifically a Mini USB interface, a Micro USB interface, a USB Type C interface, or the like. The USB interface 130 may be configured to connect to a charger to charge the electronic device 100, and may be configured to transmit data between the electronic device 100 and a peripheral device, The USB interface may also be configured to connect to a headset, to play audio by using the headset. The interface may be further configured to connect to another electronic device, for example, an AR device.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. When charging the battery 142, the charging management module 140 may further supply power for the electronic device by using the power management module 141.

The power management module 141 is configured to connect the battery 142, the charging management module 140, and the processor 110. The power management module 141 receives an input of the battery 142 and/or the charging management module 140, and supplies power for the processor 110, the internal memory 121, an external memory, the display screen 194, the camera 193, the wireless communications module 160, and the like.

A wireless communications function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communications module 150 may provide a wireless communications solution that is applied to the electronic device 100 and that includes 2G/3G/4G/5G. The mobile communications module 150 may include at least one filter, switch, power amplifier, low noise amplifier (low noise amplifier, LNA), and the like. The mobile communications module 150 may receive an electromagnetic wave by using the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation by using the antenna 1. In some embodiments, at least some functional modules of the mobile communications module 150 may be disposed in the processor 110. In some embodiments, at least some functional modules in the mobile communications module 150 and at least some modules in the processor 110 may be disposed in a same component.

The modem processor may include a modulator and a demodulator. The modulator is configured to modulate a to-be-sent low-frequency baseband signal into an intermediate/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same component as the mobile communications module 150 or another functional module.

The wireless communications module 160 may provide a wireless communications solution that is applied to the electronic device 100 and that includes wireless local area network (wireless local area network, WLAN) (such as a wireless fidelity (wireless fidelity, Wi-Fi) network), Bluetooth (bluetooth, BT), global navigation satellite system (global navigation satellite system, GNSS), frequency modulation (frequency modulation, FM), near field communication (near field communication, NFC), infrared (infrared, IR), and other technologies. The wireless communications module 160 may be one or more components integrating at least one communications processing module. The wireless communications module 160 receives an electromagnetic wave by using the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation by using the antenna 2.

In some embodiments, the antenna 1 of the electronic device 100 is coupled to the mobile communications module 150, and the antenna 2 is coupled to the wireless communications module 160, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), BT, GNSS, WLAN, NFC, FM, IR, and/or other technologies. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based enhancement system (satellite-based augmentation system, SBAS).

The electronic device 100 implements a display function by using the GPU, the display screen 194, the application processor, and the like. The processor 110 may include one or more GPUs that execute a program instruction to generate or change display information.

The display screen 194 is configured to display an image, a video, and the like. The display screen 194 includes a display panel. In some embodiments, the electronic device 100 may include one or N display screens 194. N is a positive integer greater than 1.

The electronic device 100 may implement a photographing function by using the ISP, the camera 193, the video codec, the GPU, the display screen 194, the application processor, and the like.

The camera 193 is configured to capture a static image or a video. In some embodiments, the electronic device 100 may include one or N cameras 193. N is a positive integer greater than 1.

The external memory interface 120 may be configured to connect to an external memory card, for example, a Micro SD card, to expand a storage capability of the electronic device 100.

The internal memory 121 may be configured to store computer-executable program code. The executable program code includes instructions. The processor 110 runs the instructions stored in the internal memory 121, to execute various function applications and data processing of the electronic device 100, to enable the electronic device 100 to implement the communications method in embodiments of this application.

The electronic device 100 may implement an audio function, for example, music playing or recording, by using the audio module 170, the speaker 170A, the receiver 170B, the microphone 170C, the headset interface 170D, the application processor, and the like.

The audio module 170 is configured to convert digital audio information into an analog audio signal for output, and convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. With the electronic device 100, a user may listen to music or listen to a hands-free call by using the speaker 170A. In some embodiments, one or more speakers 170A may be disposed in the electronic device 100.

The receiver 170B, also referred to as a "phone receiver", is configured to convert an electrical audio signal into a sound signal. With the electronic device 100, when the user answers a call or receives a voice message, the receiver 170B may be placed close to a human ear to listen to a voice. The microphone 170C, also referred to as a "mic" or a "sound transmitter", is configured to convert a sound signal into an electrical signal. When making a call or sending a voice message, the user may make a voice with the mouth near the microphone 170C, so that a sound signal is input to the microphone 170C. At least one microphone 170C may be disposed in the electronic device 100. In some other embodiments, two microphones 170C may be disposed in the electronic device 100, to collect a sound signal and implement a noise reduction function. In some other embodiments, alternatively, three, four, or more microphones 170C may be disposed in the electronic device 100, to collect a sound signal, reduce noise, recognize a sound source to implement a directional sound recording function and the like.

The headset interface 170D is configured to connect to a wired headset. The headset interface 170D may be a USB interface 130, or may be a 3.5 mm open mobile terminal platform (open mobile terminal platform, OMTP) standard interface or a US cellular telecommunications industry association (cellular telecommunications industry association of the USA, CTIA) standard interface.

The pressure sensor is configured to sense a pressure signal, and may convert the pressure signal into an electrical signal. In some embodiments, the pressure sensor may be disposed on the display screen 194. The electronic device 100 may calculate a touch position based on a signal detected by the pressure sensor.

The touch sensor is also referred to as a "touch panel". The touch sensor may be disposed on the display screen 194, and the touch sensor and the display screen 194 constitute a touchscreen, which is also referred to as a "touch control screen". The touch sensor is configured to detect a touch operation performed on or near the touch sensor. The touch sensor may transfer the detected touch operation to the application processor to determine a touch event type.

The button 190 includes a start button (or referred to as a power button), a volume button, and the like. The button 190 may be a mechanical button, or may be a touch button. The electronic device 100 may receive a button input, generate a button signal input that is related to user setting and function control of the electronic device 100.

The motor 191 may generate a vibration prompt. The motor 191 may be configured to generate an incoming call vibration prompt and a touch vibration feedback. For example, touch operations applied to different applications (for example, photographing and audio playing) may correspond to different vibration feedback effects.

The indicator 192 may be an indicator light, and may be configured to indicate a charging status and a battery level change, and may also be configured to indicate a message, a missed call, a notification, and the like.

A software system of the electronic device 100 may use a layered architecture, an event-driven architecture, a microkernel architecture, a microservice architecture, or a cloud architecture. In an embodiment of this application, an Android system with a layered architecture is used as an example to describe a software structure of the electronic device 100.

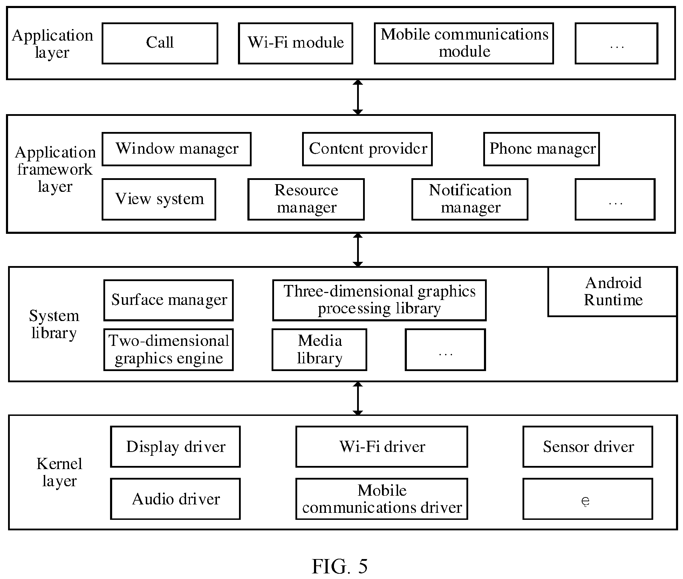

FIG. 5 is a block diagram of a software structure of the electronic device 100 according to an embodiment of this application.

In the layered architecture of the electronic device 100, software is divided into several layers, and each layer has a clear role and task. The layers communicate with each other through a software interface. In some embodiments, the Android system is divided into four layers from top to bottom: an application layer, an application framework layer, Android Runtime (Android Runtime) and a system library, and a kernel layer.

The application layer may include a series of application packages.

As shown in FIG. 5, the application packages may include call, Wi-Fi module, and mobile communications module applications, and may further include camera, gallery, calendar, map, navigation, Bluetooth, music, video, SMS, and other applications.

In embodiments of this application, the Wi-Fi module may be configured to detect whether a Wi-Fi status of the electronic device changes, and the mobile communications module may be configured to adjust a mobile communications network in which the electronic device registers.

The framework layer provides an application programming interface (application programming interface, API) and a programming framework for the applications at the application layer. The application framework layer may include some predefined functions.

As shown in FIG. 5, the application framework layer may include a window manager, a content provider, a view system, a phone manager, a resource manager, a notification manager, and the like.

The window manager is configured to manage a window program. The window manager may obtain a size of the display screen, determine whether there is a status bar, lock the screen, capture the screen, and the like.

The content provider is configured to store and obtain data, and make the data accessible to an application. The data may include videos, images, audio, calls made and received, browsing histories and bookmarks, phone books, and the like.

The view system includes visual controls, such as a text display control and a picture display control. The view system may be configured to construct an application. A display interface may include one or more views. For example, a display interface including an SMS notification icon may include a view displaying a text and a view displaying a picture.

The phone manager is configured to provide a communications function of the electronic device 100, for example, call status management (including call connection and call disconnection).

The resource manager provides various resources to applications, such as localized strings, icons, pictures, layout files, and video files.

The notification manager allows applications to display notification information in the status bar, which may be used to convey notification-type messages, and may automatically disappear after a short stay without user interaction. For example, the notification manager is configured to notify downloading completion and message reminders.

Android Runtime includes a kernel library and a virtual machine. Android Runtime is responsible for scheduling and management of the Android system.

The kernel library includes two parts: one part is a function that a Java language needs to invoke, and the other part is a kernel library of Android.

The application layer and the application framework layer run in the virtual machine. The virtual machine executes java files of the application layer and the application framework layer into binary files. The virtual machine is configured to perform object life cycle management, stack management, thread management, security and exception management, and garbage collection, and other functions.

The system library include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D image layers for a plurality of applications.

The media library supports playback and recording of audio and videos in a plurality of common formats, and still image files and the like. The media library may support a plurality of audio and video coding formats, such as MPEG4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, an audio driver, a Wi-Fi driver, a sensor driver, a mobile communications driver, and the like. The hardware includes at least the processor, the display screen, the Wi-Fi module, the mobile communications module, the sensors, and the like.

It may be understood that the layers in the software structure shown in FIG. 5 and the components included in each layer do not constitute a specific limitation on the electronic device 100. In other embodiments of this application, the electronic device 100 may include more or fewer layers than shown in the figures, and each layer may include more or fewer components. This is not limited in this application.

It may be understood that, to implement the communications method in embodiments of this application, the electronic device includes corresponding hardware and/or software modules for performing various functions. With reference to algorithms and steps in examples described in embodiments disclosed in this specification, this application can be implemented by hardware or a combination of hardware and computer software. Whether a function is performed by hardware or hardware driven by computer software depends on specific applications and design constraints of the technical solutions. Persons skilled in the art may use different methods to implement the described functions for each specific application with reference to embodiments. However, it should not be considered that the implementation goes beyond the scope of this application.

An embodiment of this application provides a communications method. The following description is provided by using an example in which UE is a mobile phone. When the mobile phone is connected to Wi-Fi and a Wi-Fi signal is good, the mobile phone disables a 5G SA mode of the mobile phone, so that the mobile phone re-registers in a 4G mobile communications network. Then, a user may perform Internet access based on a Wi-Fi network, and perform a voice call based on the 4G mobile communications network. In this way, a success rate of the voice call of the user is ensured, and good Internet access experience can be provided to the user.

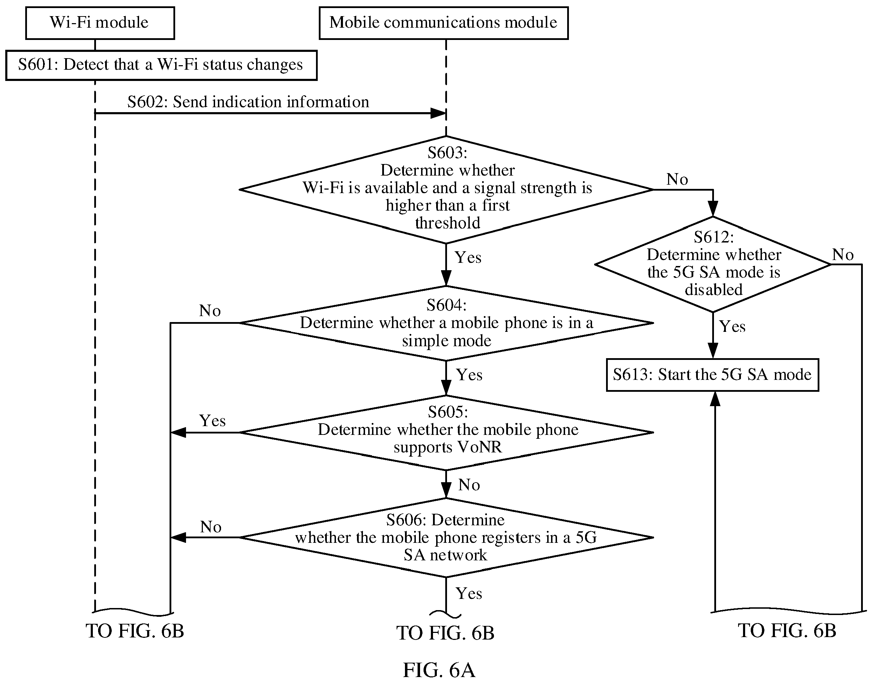

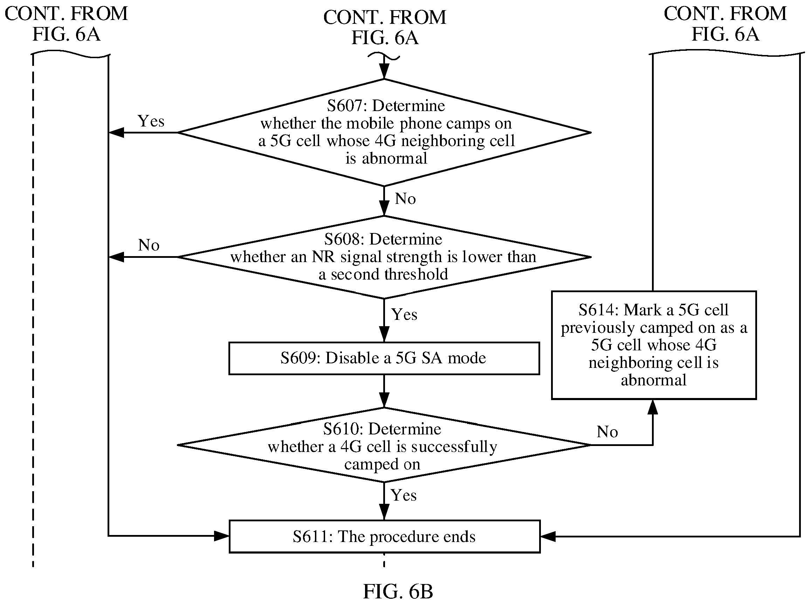

Refer to FIG. 6A and FIG. 6B, which are a schematic diagram of interaction between modules. A procedure of the communications method provided in this embodiment of this application specifically includes the following steps.

S601: A Wi-Fi module detects that a Wi-Fi status changes.

The Wi-Fi status is a Wi-Fi connection related status, and includes but is not limited to a Wi-Fi connection status, a Wi-Fi signal strength value, and the like. The Wi-Fi connection status may include Wi-Fi connected and Wi-Fi unconnected.

For example, when the Wi-Fi module detects that the Wi-Fi status of the mobile phone switches from Wi-Fi connected to Wi-Fi unconnected, or switches from Wi-Fi unconnected to Wi-Fi connected, it is determined that the Wi-Fi status of the mobile phone changes.

For another example, when the Wi-Fi module detects that the Wi-Fi signal strength value increases or decreases, it is determined that the Wi-Fi status of the mobile phone changes.

The Wi-Fi module detects, in real time based on related data collected by the Wi-Fi module, whether the Wi-Fi status of the mobile phone changes.

S602: The Wi-Fi module sends indication information to a mobile communications module. When detecting that the Wi-Fi status changes, the Wi-Fi module sends indication information to the mobile communications module.

The indication information indicates to the mobile communications module that the Wi-Fi status of the mobile phone changes. For example, the indication information includes but is not limited to the Wi-Fi connection status and the Wi-Fi signal strength value.

S603: The mobile communications module determines whether Wi-Fi is available and a signal strength is higher than a first threshold. If Wi-Fi is available and the signal strength is higher than the first threshold, S604 is performed. If Wi-Fi is unavailable or the signal strength is not higher than the first threshold, S612 is performed.

The mobile communications module receives the indication information, and determines, based on the indication information, whether Wi-Fi is available. If the Wi-Fi connection status is connected, Wi-Fi of the mobile phone is available. If the Wi-Fi connection status is unconnected, Wi-Fi of the mobile phone is unavailable.

When Wi-Fi of the mobile phone is available, the mobile communications module continues to determine whether the Wi-Fi signal strength is higher than the first threshold. According to the invention, when the Wi-Fi signal strength is higher than the first threshold, the mobile communications module may determine that a Wi-Fi signal of the mobile phone is currently good. When the Wi-Fi signal strength is not higher than the first threshold, the mobile communications module may determine that a Wi-Fi signal of the mobile phone is currently poor. The first threshold may be set, and the first threshold is not limited in this embodiment.

In a possible case, when Wi-Fi is unavailable, that is, when the Wi-Fi status of the mobile phone is Wi-Fi unconnected, the Wi-Fi module of the mobile phone cannot provide an Internet access condition for the user. In this case, the mobile phone further needs the mobile communications module to start a 5G SA mode, to provide an Internet access condition for the user at a higher data rate. In this case, the mobile communications module of the mobile phone further needs to determine whether the 5G SA mode of the mobile phone is disabled, and needs to restart the 5G SA mode of the mobile phone if the 5G SA mode of the mobile phone is disabled. If the 5G SA mode of the mobile phone is not disabled, a mobile communications network in which the mobile phone registers does not need to be adjusted, and the procedure ends.

In another possible case, when Wi-Fi is available, that is, the Wi-Fi status of the mobile phone is Wi-Fi connected, but the Wi-Fi signal strength is not higher than the first threshold, the Wi-Fi module of the mobile phone cannot provide a good Internet access condition for the user, either. In this case, if the mobile communications module of the mobile phone starts the 5G SA mode, an Internet access condition can be provided for the user at a higher data rate. In this case, the mobile communications module of the mobile phone further needs to determine whether the 5G SA mode of the mobile phone is disabled, and needs to restart the 5G SA mode of the mobile phone if the 5G SA mode of the mobile phone is disabled. If the 5G SA mode of the mobile phone is not disabled, a mobile communications network in which the mobile phone registers does not need to be adjusted, and the procedure ends.

In still another possible case, when Wi-Fi is available, that is, the Wi-Fi status of the mobile phone is Wi-Fi connected, and the Wi-Fi signal strength is higher than the first threshold, the Wi-Fi module of the mobile phone can provide a good Internet access condition for the user. In this case, if the mobile communications module of the mobile phone disables the 5G SA mode, Internet access experience of the user is not affected.

Therefore, when Wi-Fi is available and the Wi-Fi signal strength is higher than the first threshold, the mobile communications module of the mobile phone may consider to disable the 5G SA mode, so that the mobile phone re-camps on a 4G mobile communications network. In this way, when the mobile phone performs voice communication, Eps fallback type voice communication does not occur, and a call is established through VoLTE, thereby increasing a success rate of voice communication of the mobile phone.

S604: The mobile communications module determines whether the mobile phone is in a simple mode. If the mobile phone is in the simple mode, S605 is performed. If the mobile phone is not in the simple mode, S611 is performed.

When Wi-Fi of the mobile phone is available and the Wi-Fi signal strength is higher than the first threshold, the mobile communications module of the mobile phone may further determine whether the mobile phone is in a simple mode, and determine, based on a determining result, whether to adjust the mobile communications network in which the mobile phone registers.

The simple mode may also be referred to as an elderly-oriented mode (a name of the mode is not limited in this embodiment), whose switch status is used to indicate whether the user is sensitive to the mobile network in which the mobile phone registers.

For example, when the mobile phone is in the simple mode, that is, the simple mode of the mobile phone is started, it indicates that the user is insensitive, does not care, or the like about the mobile network in which the mobile phone registers, for example, it indicates that the user is insensitive to whether an interface of the mobile phone displays that the mobile phone currently uses a 5G mobile communications network.

Therefore, when Wi-Fi is available, the Wi-Fi signal strength is higher than the first threshold, and the mobile phone is in the simple mode, the mobile communications module of the mobile phone may consider to disable the 5G SA mode, so that the mobile phone re-camps on a 4G mobile communications network. In this way, the 5G SA mode of the mobile phone is disabled in this case, so that user experience is not affected, that is, a psychological sense of the user on the mobile communications network of the mobile phone is not affected.

S605: The mobile communications module determines whether the mobile phone supports VoNR. If the mobile phone does not support VoNR, S606 is performed. If the mobile phone supports VoNR, S611 is performed.

When Wi-Fi is available, the Wi-Fi signal strength is higher than the first threshold, and the mobile phone is in the simple mode, before disabling the 5G SA mode, the mobile communications module of the mobile phone may further consider whether the mobile phone supports VoNR.

If the mobile phone supports VoNR, the mobile phone may establish a call through VoNR. When the mobile phone supports VoNR, Eps fallback type voice communication may be avoided. Therefore, in this case, the mobile communications module of the mobile phone does not need to disable the 5G SA mode, that is, does not need to adjust the mobile communications network in which the mobile phone registers, and the procedure ends.

In this way, the mobile phone can provide stable voice communication at a high success rate for the user based on VoNR, and can provide a high-rate Internet access condition for the user.

When Wi-Fi is available, the Wi-Fi signal strength is higher than the first threshold, and the mobile phone is in the simple mode, if the mobile phone does not support VoNR, Eps fallback type voice communication cannot be avoided. In this case, the mobile communications module of the mobile phone may determine, with reference to another condition, whether to adjust the mobile communications network in which the mobile phone registers.

S606: The mobile communications module determines whether the mobile phone registers in a 5G SA network. If the mobile phone registers in a 5G SA network, S607 is performed. If the mobile phone does not register in a 5G SA network, S611 is performed.

The mobile communications module further needs to determine whether the mobile phone registers in a 5G SA network. If the mobile phone registers in a 5G SA network, the mobile communications module may further determine, with reference to another condition, whether to adjust the mobile communications network in which the mobile phone registers, to avoid an Eps fallback type voice call.

If the mobile phone does not register in a 5G SA network, in this implementation, the mobile communications module does not need to adjust the mobile communications network in which the mobile phone registers, and the procedure ends.

S607: The mobile communications module determines whether the mobile phone camps on a 5G cell whose 4G neighboring cell is abnormal. If the mobile phone does not camp on a 5G cell whose 4G neighboring cell is abnormal, S608 is performed. If the mobile phone camps on a 5G cell whose 4G neighboring cell is abnormal, S611 is performed.

The 4G neighboring cell is a neighboring 4G cell.

If a 4G neighboring cell of the 5G cell on which the mobile phone currently camps is abnormal, the mobile phone cannot normally register in a 4G mobile communications network. Therefore, if the mobile communications module of the mobile phone determines that the 5G cell on which the mobile phone currently camps is a 5G cell whose 4G neighboring cell is abnormal, the mobile communications network in which the mobile phone registers cannot be adjusted, that is, the mobile phone cannot complete registration in a 4G mobile communications network, and the procedure ends.

In this way, when the mobile communications module determines that the mobile phone camps on a 5G cell whose 4G neighboring cell is abnormal, the mobile communications network in which the mobile phone registers is not adjusted, to avoid a failure to adjust the mobile communications network in which the mobile phone registers, or a failure of the mobile phone to successfully register in a mobile communications network.

For example, the mobile communications module may query for each 5G cell whose 4G neighboring cell is abnormal, for example, query a lists of 5G cells whose 4G neighboring cells are abnormal. The mobile communications module may compare the 5G cell on which the mobile phone currently camps with each 5G cell whose 4G neighboring cell is abnormal, to determine whether the mobile phone camps on a 5G cell whose 4G neighboring cell is abnormal. The "4G neighboring cell is abnormal" means not covered by a 4G neighboring cell or a registration failure in 4G caused by an abnormal 4G cell.

If determining that the mobile phone does not camp on a 5G cell whose 4G neighboring cell is abnormal, the mobile communications module may further determine, with reference to another condition, whether to adjust the mobile communications network in which the mobile phone registers.

When Wi-Fi of the mobile phone is available and the Wi-Fi signal strength is higher than the first threshold, if the mobile phone is in the simple mode, the mobile phone does not support VoNR, the mobile phone registers in the 5G SA network, and the 5G cell on which the mobile phone currently camps is not a 5G cell whose 4G neighboring cell is abnormal, the mobile communications module of the mobile phone may disable the 5G SA mode, so that the mobile phone re-camps on a 4G mobile communications network, so that a voice call can be established through VoLTE.

It should be noted that, a sequence of performing S604, S605, S606, and S607 is not limited in this implementation. That is, S604, S605, S606, and S607 may be performed in different sequences in this implementation.

S608: The mobile communications module determines whether an NR signal strength of the mobile phone is lower than a second threshold. If the NR signal strength of the mobile phone is lower than the second threshold, S609 is performed. If the NR signal strength of the mobile phone is not lower than the second threshold, S611 is performed.

In this implementation, the mobile communications module of the mobile phone may further determine, with reference to a current NR signal strength of the mobile phone, whether to adjust the mobile communications network in which the mobile phone registers.

If the NR signal strength of the mobile phone is higher than the second threshold, it indicates that an NR signal of the mobile phone is good, and a failure rate of Eps fallback type voice communication may be low. In this case, the mobile communications module of the mobile phone may not adjust the mobile communications network in which the mobile phone registers, and the procedure ends.

If the NR signal strength of the mobile phone is lower than the second threshold, it indicates that an NR signal of the mobile phone is poor, which undoubtedly increases the failure rate of Eps fallback type voice communication.

Therefore, when the NR signal strength of the mobile phone is lower than the second threshold, the mobile communications module may disable the 5G SA mode, so that the mobile phone re-camps on a 4G mobile communications network, and establishes a voice call through VoLTE. The disabling the 5G SA mode to adjust the mobile communications network of the mobile phone in this case increases a success rate of the voice call more obviously than disabling the 5G SA mode to adjust the mobile communications network of the mobile phone when an NR signal is good.

The second threshold may be set, and the second threshold is not limited in this embodiment.

S609: The mobile communications module disables the 5G SA mode.

After the 5G SA mode of the mobile phone is disabled, the mobile phone cannot register in a 5G mobile communications network, and then may perform a procedure of registering in a 4G mobile communications network.

S610: The mobile communications module determines whether the mobile phone successfully camps on a 4G cell. If the mobile phone does not successfully camp on a 4G cell, S614 is performed. If the mobile phone successfully camps on a 4G cell, S611 is performed.

If the mobile phone can normally register in a 4G mobile communications network, the mobile communications network in which the mobile phone registers is successfully adjusted from 5G to 4G. In this case, the mobile phone re-camps on a 4G mobile communications network, so that the mobile phone may establish a voice call through VoLTE, and the procedure ends.

Optionally, when the mobile phone may re-camp on a 4G mobile communications network, it indicates that a 5G cell on which the mobile phone previously camps has a normal 4G neighboring cell. Then, the mobile communications module may update a list of abnormal 4G cells based on the normal 4G neighboring cell, to ensure accuracy of recorded abnormal 4G cells.

Optionally, when the mobile phone may re-camp on a 4G mobile communications network, it indicates that the 5G cell on which the mobile phone previously camps is not a 5G cell whose 4G neighboring cell is abnormal. Then, the mobile communications module may update, based on the 5G cell, the list of 5G cells whose 4G neighboring cells are abnormal, to ensure accuracy of recorded 5G cells whose 4G neighboring cells are abnormal.

S611: The procedure ends.

S612: The mobile communications module determines whether the 5G SA mode is disabled. If the 5G SA mode is disabled, S613 is performed. If the 5G SA mode is not disabled, S611 is performed. S613: The mobile communications module starts the 5G SA mode.

After the 5G SA mode of the mobile phone is started, the mobile phone may register in a 5G mobile communications network.

S614: The mobile communications module marks the 5G cell previously camped on as a 5G cell whose 4G neighboring cell is abnormal, and performs S613.

After the 5G SA mode of the mobile phone is disabled, the mobile phone cannot register in a 5G mobile communications network, and then may register in a 4G mobile communications network. If the mobile phone cannot normally register in a 4G mobile communications network, it indicates that all 4G neighboring cells of the 5G cell on which the mobile phone previously camps are abnormal 4G cells, that is, it indicates that the 5G cell on which the mobile phone previously camps is a 5G cell whose 4G neighboring cell is abnormal. In this case, the mobile communications module may mark the 5G cell previously camped on as a 5G cell whose 4G neighboring cell is abnormal, and update the recorded 5G cells whose 4G neighboring cells are abnormal.

For example, the mobile communications module may further mark a 4G cell neighboring to the 5G cell previously camped on as an abnormal 4G cell, and update the recorded abnormal 4G cells. In this way, the 5G cell whose 4G neighboring cell is abnormal or the abnormal 4G cell is recorded, which helps the mobile communications module to determine whether the 5G SA mode may be disabled to adjust the mobile communications network of the mobile phone, that is, may provide a determining basis for S607.

After the 5G SA mode of the mobile phone is disabled, if the mobile phone cannot normally register in a 4G mobile communications network, the 5G SA mode of the mobile phone needs to be restarted, so that the mobile phone re-registers in a 5G mobile communications network, to ensure normal running of a mobile communications function of the mobile phone.

When a Wi-Fi signal of the mobile phone is good, when a specific condition is met, the 5G SA mode of the mobile phone is disabled, so that the mobile phone re-camps on 4G and establishes a voice call through VoLTE. In this way, a success rate of the voice call can be ensured, and the user can have good Internet access experience based on Wi-Fi communication. Therefore, in an early stage of 5G SA system construction, when a 5G SA network is not stable enough, this can ensure a success rate of voice communication of the user, and can ensure an Internet access speed of the user, thereby implementing a balance between calling and Internet access.

In an implementation, after the 5G SA mode of the mobile phone is disabled, if the mobile phone successfully completes registration in a 4G mobile communications network, the mobile phone further exits the 4G mobile communications network based on a change of the Wi-Fi status, and re-registers in a 5G mobile communications network. In this way, once the Wi-Fi connection cannot provide good Internet access experience for the user, the mobile phone re-registers in a 5G mobile communications network, rather than keeps camping on a 4G cell, thereby ensuring fluent Internet access experience of the user.

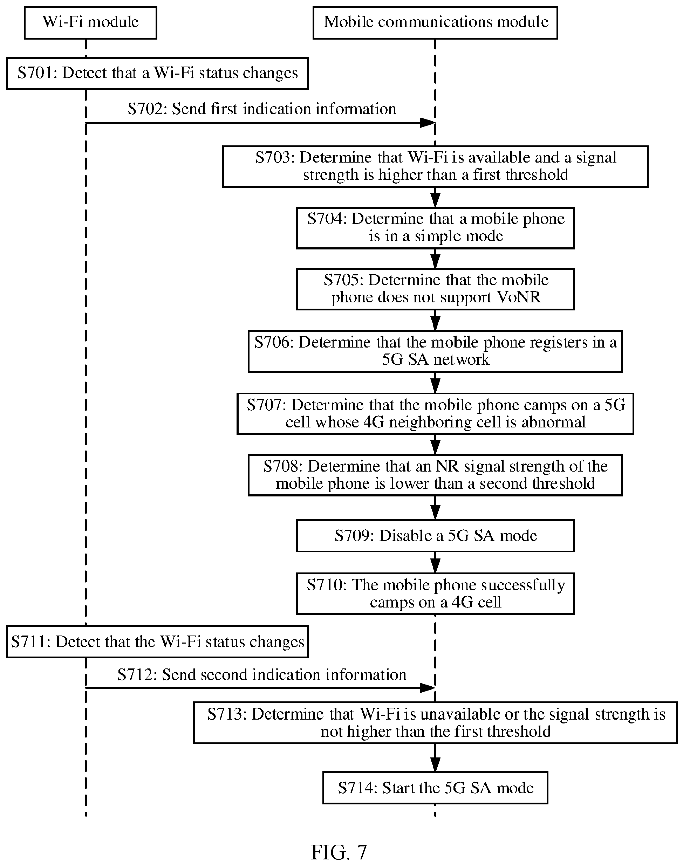

Refer to FIG. 7, which is a schematic diagram of interaction between modules. A procedure of the communications method provided in this embodiment of this application specifically includes the following steps.

S701: A Wi-Fi module detects that a Wi-Fi status changes.

S702: The Wi-Fi module sends first indication information to a mobile communications module.

S703: The mobile communications module determines that Wi-Fi of the mobile phone is available and a signal strength is higher than a first threshold.

S704: The mobile communications module determines that the mobile phone is in a simple mode.

S705: The mobile communications module determines that the mobile phone does not support VoNR.

S706: The mobile communications module determines that the mobile phone registers in a 5G SA network.

S707: The mobile communications module determines that the mobile phone camps on a 5G cell whose 4G neighboring cell is abnormal.

A sequence of performing S704 to S707 is not limited in this embodiment.

S708: The mobile communications module determines that an NR signal strength of the mobile phone is lower than a second threshold.

S709: The mobile communications module disables a 5G SA mode.

S710: The mobile communications module determines that the mobile phone successfully camps on a 4G cell.

S711: The Wi-Fi module detects that the Wi-Fi status changes.

After the mobile communications module disables the 5G SA mode, and the mobile phone exits a 5G mobile communications network, and successfully registers in a 4G mobile communications network, the Wi-Fi status of the mobile phone may change. For example, a Wi-Fi connection status changes. For another example, a Wi-Fi signal strength value changes.

S712: The Wi-Fi module sends second indication information to the mobile communications module.

When detecting that the Wi-Fi status changes, the Wi-Fi module continues to send indication information to the mobile communications module, to notify the mobile communications module of a current Wi-Fi status of the mobile phone, so that the mobile communications module may determine, based on the current Wi-Fi status of the mobile phone, whether a mobile communications network of the mobile phone needs to be adjusted.

S713: The mobile communications module determines that Wi-Fi is unavailable or the signal strength is not higher than the first threshold.

S714: The mobile communications module starts the 5G SA mode.

In a possible case, when Wi-Fi is unavailable, that is, when the Wi-Fi status of the mobile phone is Wi-Fi unconnected, the Wi-Fi module of the mobile phone cannot provide an Internet access condition for the user, and is switched to the mobile communications module to provide an Internet access condition for the user based on a 4G mobile communications network. In this case, to ensure that the user has better Internet access experience, the mobile phone further needs the mobile communications module to start the 5G SA mode, so that the mobile phone re-registers in a 5G cell, to provide an Internet access condition for the user at a higher data rate.

In another possible case, when Wi-Fi is available, that is, the Wi-Fi status of the mobile phone is Wi-Fi connected, but the Wi-Fi signal strength is not higher than the first threshold, the Wi-Fi module of the mobile phone cannot provide a good Internet access condition for the user, either. In this case, to ensure that the user has better Internet access experience, the mobile phone further needs the mobile communications module to start the 5G SA mode, so that the mobile phone re-registers in a 5G cell, to provide an Internet access condition for the user at a higher data rate. For parts that are not explained in detail in this procedure, refer to the foregoing embodiment. Details are not described herein again.

In this way, after the mobile phone re-camps on a 4G cell, once Wi-Fi communication cannot provide good Internet access experience for the user, the 5G SA mode of the mobile phone is restarted, so that the mobile phone re-registers in a 5G mobile communications network, thereby ensuring fluent Internet access experience of the user.

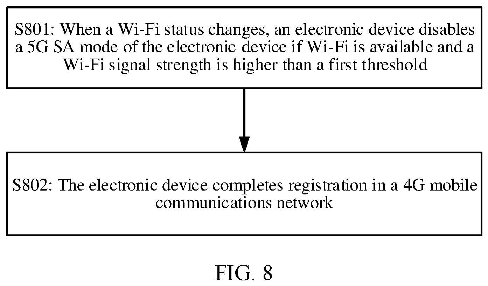

An embodiment provides a communications method. The communications method is applied to an electronic device (for example, a mobile phone or a smart wearable device), and the electronic device registers in 5G SA. As shown in FIG. 8, the communications method of the invention includes the following steps.

S801: When a Wi-Fi status changes, the electronic device disables a 5G SA mode of the electronic device if Wi-Fi is available and a Wi-Fi signal strength is higher than a first threshold.

The Wi-Fi status is a Wi-Fi connection related status, and includes but is not limited to a Wi-Fi connection status, a Wi-Fi signal strength value, and the like. The Wi-Fi connection status may include Wi-Fi connected and Wi-Fi unconnected.

For example, when a Wi-Fi module detects that the Wi-Fi status of the electronic device switches from Wi-Fi connected to Wi-Fi unconnected, or switches from Wi-Fi unconnected to Wi-Fi connected, it is determined that the Wi-Fi status of the electronic device changes. For another example, when the Wi-Fi module detects that the Wi-Fi signal strength value increases or decreases, it is determined that the Wi-Fi status of the electronic device changes.

When the Wi-Fi status changes, the electronic device disables the 5G SA mode of the electronic device if Wi-Fi is available and the Wi-Fi signal strength is higher than the first threshold. After the 5G SA mode of the electronic device is disabled, the electronic device cannot register in a 5G mobile communications network, and then may register in a 4G mobile communications network. S802: The electronic device completes registration in a 4G mobile communications network.

When a 4G cell in which the electronic device is located is normal, the electronic device can successfully register in a 4G mobile communications network, and camp on the corresponding 4G cell.

After the electronic device re-camps on the 4G mobile communications network, the electronic device can establish a voice call through VoLTE, so that Eps fallback type voice communication does not occur, thereby ensuring a success rate of the voice call. In addition, the electronic device can enable, based on Wi-Fi communication, a user to have good Internet access experience. Therefore, in an early stage of 5G SA system construction, when a 5G SA network is not stable enough, this can ensure a success rate of voice communication of the user, and can ensure an Internet access speed of the user, thereby implementing a balance between calling and Internet access.

In an implementation, if the electronic device does not successfully register in the 4G mobile communications network, the electronic device restarts the 5G SA mode of the electronic device. After the 5G SA mode of the electronic device is disabled, the electronic device cannot register in a 5G mobile communications network, and then registers in a 4G mobile communications network. If the electronic device cannot normally register in the 4G mobile communications network, it indicates that all 4G neighboring cells of a 5G cell on which the electronic device previously camps are abnormal 4G cells, or there is no available 4G neighboring cell, that is, it indicates that the 5G cell on which the electronic device previously camps is a 5G cell whose 4G neighboring cell is abnormal. In this case, the electronic device restarts the 5G SA mode of the electronic device, so that the electronic device re-registers in a 5G mobile communications network, to ensure normal running of a mobile communications function of the electronic device.

In an implementation, if the registration in the 4G mobile communications network does not succeed, a target 5G cell is marked as a 5G cell whose 4G neighboring cell is abnormal. The target 5G cell is a 5G cell on which the electronic device camps before disabling the 5G SA mode.

After the 5G SA mode of the electronic device is disabled, the electronic device cannot register in a 5G mobile communications network, and then registers in a 4G mobile communications network.

If the electronic device cannot normally register in the 4G mobile communications network, it indicates that all 4G neighboring cells of a 5G cell on which the electronic device previously camps are abnormal 4G cells, that is, it indicates that the 5G cell on which the electronic device previously camps is a 5G cell whose 4G neighboring cell is abnormal. In this case, the electronic device may mark the 5G cell previously camped on as a 5G cell whose 4G neighboring cell is abnormal, and update recorded 5G cells whose 4G neighboring cells are abnormal.

In an implementation, after the electronic device completes the registration in the 4G mobile communications network, if Wi-Fi is unavailable or the Wi-Fi signal strength is not higher than the first threshold, the electronic device restarts the 5G SA mode of the electronic device.

In a possible case, when Wi-Fi is unavailable, that is, when the Wi-Fi status of the electronic device is Wi-Fi unconnected, the Wi-Fi module of the electronic device cannot provide an Internet access condition for the user, and is switched to a mobile communications module to provide an Internet access condition for the user based on a 4G mobile communications network. In this case, to ensure that the user has better Internet access experience, the electronic device further needs the mobile communications module to start the 5G SA mode, so that the electronic device re-registers in a 5G cell, to provide an Internet access condition for the user at a higher data rate.

In another possible case, when Wi-Fi is available, that is, the Wi-Fi status of the electronic device is Wi-Fi connected, but the Wi-Fi signal strength is not higher than the first threshold, the Wi-Fi module of the electronic device cannot provide a good Internet access condition for the user, either. In this case, to ensure that the user has better Internet access experience, the electronic device further needs the mobile communications module to start the 5G SA mode, so that the electronic device re-registers in a 5G cell, to provide an Internet access condition for the user at a higher data rate.

In this way, after the electronic device re-camps on a 4G cell, once Wi-Fi communication cannot provide good Internet access experience for the user, the 5G SA mode of the electronic device is restarted, so that the electronic device re-registers in a 5G mobile communications network, thereby ensuring fluent Internet access experience of the user.

In an optional implementation, S801 may be adjusted as follows: When a Wi-Fi status changes, disable a 5G SA mode of the electronic device if Wi-Fi is available, a Wi-Fi signal strength is higher than a first threshold, and a specific condition is met.

Optionally, when Wi-Fi is available and the Wi-Fi signal strength is higher than the first threshold, if the electronic device does not support VoNR, and a 5G cell on which the electronic device currently camps is not a 5G cell whose 4G neighboring cell is abnormal, the 5G SA mode of the electronic device is disabled.

If the electronic device supports VoNR electronic device may establish a call through VoNR. When the electronic device supports VoNR, Eps fallback type voice communication may be avoided. Therefore, in this case, the mobile communications module of the electronic device does not need to disable the 5G SA mode, that is, does not need to adjust a mobile communications network in which the electronic device registers.

If a 4G neighboring cell of the 5G cell on which the electronic device currently camps is abnormal, the electronic device cannot normally register in a 4G mobile communications network. Therefore, if the electronic device determines that the 5G cell on which the electronic device currently camps is a 5G cell whose 4G neighboring cell is abnormal, the mobile communications network in which the electronic device registers cannot be adjusted, that is, the electronic device cannot complete registration in a 4G mobile communications network.

Therefore, when Wi-Fi is available and the Wi-Fi signal strength is higher than the first threshold, if the electronic device does not support VoNR, and the 5G cell on which the electronic device currently camps is not a 5G cell whose 4G neighboring cell is abnormal, the 5G SA mode of the electronic device is disabled, so that the electronic device exits a 5G mobile communications network. If the electronic device supports VoNR, or the 5G cell on which the electronic device currently camps is a 5G cell whose 4G neighboring cell is abnormal, the 5G SA mode of the electronic device is not disabled, that is, the mobile communications network of the electronic device is not adjusted.

Optionally, when Wi-Fi is available and the Wi-Fi signal strength is higher than the first threshold, if the electronic device does not support VoNR, the 5G cell on which the electronic device currently camps is not a 5G cell whose 4G neighboring cell is abnormal, and the electronic device is in a target mode, the 5G SA mode of the electronic device is disabled. The target mode is used to indicate that the user is insensitive to a mobile communications network in which the electronic device registers.

For example, the target mode may be referred to as a simple mode or an elderly-oriented mode.

For example, when the electronic device is in the simple mode, that is, the simple mode of the electronic device is started, it indicates that the user is insensitive, does not care, or the like about the mobile network in which the electronic device registers, for example, it indicates that the user is insensitive to whether an interface of the electronic device displays that the electronic device currently uses a 5G mobile communications network.

Therefore, when Wi-Fi is available and the Wi-Fi signal strength is higher than the first threshold, if the electronic device does not support VoNR, the 5G cell on which the electronic device currently camps is not a 5G cell whose 4G neighboring cell is abnormal, and the electronic device is in the target mode, the 5G SA mode of the electronic device is disabled, so that the electronic device exits a 5G mobile communications network.

Optionally, when Wi-Fi is available and the Wi-Fi signal strength is higher than the first threshold, if the electronic device does not support VoNR, the 5G cell on which the electronic device currently camps is not a 5G cell whose 4G neighboring cell is abnormal, and an NR signal strength of the electronic device is lower than a second threshold, the 5G SA mode of the electronic device is disabled.

If the NR signal strength of the electronic device is higher than the second threshold, it indicates that an NR signal of the electronic device is good, and a failure rate of Eps fallback type voice communication may be low. If the NR signal strength of the electronic device is lower than the second threshold, it indicates that an NR signal of the electronic device is poor, which undoubtedly increases the failure rate of Eps fallback type voice communication.

Therefore, when Wi-Fi is available and the Wi-Fi signal strength is higher than the first threshold, if the electronic device does not support VoNR, the 5G cell on which the electronic device currently camps is not a 5G cell whose 4G neighboring cell is abnormal, and the NR signal strength of the electronic device is lower than the second threshold, the 5G SA mode of the electronic device is disabled, so that the electronic device exits a 5G mobile communications network.

Optionally, when Wi-Fi is available and the Wi-Fi signal strength is higher than the first threshold, if the electronic device does not support VoNR, the 5G cell on which the electronic device currently camps is not a 5G cell whose 4G neighboring cell is abnormal, the electronic device is in the target mode, and the NR signal strength of the electronic device is lower than the second threshold, the 5G SA mode of the electronic device is disabled. The target mode is used to indicate that the user is insensitive to the mobile communications network in which the electronic device registers. For parts that are not explained in detail in this embodiment, refer to the foregoing embodiment. Details are not described herein again.

When a Wi-Fi signal of the electronic device is good, when a specific condition is met, the 5G SA mode of the electronic device is disabled, so that the electronic device re-camps on 4G and establishes a voice call through VoLTE. In this way, a success rate of the voice call can be ensured, and a user can have good Internet access experience based on Wi-Fi communication. Therefore, in an early stage of 5G SA system construction, when a 5G SA network is not stable enough, this can ensure a success rate of voice communication of the user, and can ensure an Internet access speed of the user, thereby implementing a balance between calling and Internet access.

An embodiment further provides a computer storage medium. The computer storage medium stores computer instructions, and when the computer instructions are run on an electronic device, the electronic device is enabled to perform the foregoing related method steps to implement the communications method in the foregoing embodiment.

An embodiment further provides a computer program product. When the computer program product runs on a computer, the computer is enabled to perform the foregoing related steps to implement the communications method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the communications method in the foregoing method embodiments.

The electronic device (such as a mobile phone), the computer storage medium, the computer program product, and the chip that are provided in the embodiments are all configured to perform corresponding methods provided above. Therefore, for beneficial effects that can be achieved by them, refer to beneficial effects in the corresponding methods provided above. Details are not described herein again.

Based on descriptions about the foregoing implementations, persons skilled in the art may understand that, for a purpose of convenient and brief description, division of the foregoing functional modules is merely used as an example for description. In actual application, the foregoing functions may be allocated to and completed by different functional modules as required, that is, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of modules or units is merely logical function division and may be other division during actual implementation. For example, a plurality of units or components may be combined or integrated into another apparatus, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

In conclusion, the foregoing embodiments are merely intended for describing the technical solutions of this application, but not for limiting this application.

## Claims

1. A communications method, wherein the method is performed by an electronic device (100), the electronic device (100) registers in 5G standalone, SA, and the method comprises:
when a Wi-Fi status changes, disabling (S609) a 5G SA mode of the electronic device (100) if Wi-Fi is available and a Wi-Fi signal strength is higher than a first threshold, and the electronic device (100) does not support Voice over New Radio, VoNR, wherein Wi-Fi being available and the Wi-Fi signal strength being higher than the first threshold indicates a good Wi-Fi signal and the Wi-Fi being available and the Wi-Fi signal strength not being higher than the first threshold indicates a poor Wi-Fi signal; and
completing registration in a 4G mobile communications network.

2. The method according to claim 1, wherein the disabling (S609) the 5G SA mode of the electronic device (100) comprises:
if a 5G cell on which the electronic device (100) currently camps is not a 5G cell whose 4G neighboring cell is abnormal, disabling (S609) the 5G SA mode of the electronic device (100).

3. The method according to claim 2, wherein the disabling (S609) the 5G SA mode of the electronic device (100) comprises:
if the electronic device (100) is in a target mode, disabling (S609) the 5G SA mode of the electronic device (100), wherein
the target mode is used to indicate that a user is insensitive to a mobile communications network in which the electronic device registers.

4. The method according to claim 2 or 3, wherein the disabling (S609) the 5G SA mode of the electronic device (100) comprises:
if a new radio NR signal strength of the electronic device (100) is lower than a second threshold, disabling (S609) the 5G SA mode of the electronic device (100).

5. The method according to claim 1, further comprising:
if the registration in the 4G mobile communications network does not succeed, restarting the 5G SA mode of the electronic device (100).

6. The method according to claim 5, further comprising:
if the registration in the 4G mobile communications network does not succeed, marking a target 5G cell as a 5G cell whose 4G neighboring cell is abnormal, wherein
the target 5G cell is a 5G cell on which the electronic device (100) camps before disabling (S609) the 5G SA mode.

7. The method according to claim 1, wherein after the completing registration in a 4G mobile communications network, the method further comprises:
if Wi-Fi is unavailable or the Wi-Fi signal strength is not higher than the first threshold, restarting the 5G SA mode of the electronic device (100).

8. An electronic device (100), wherein the electronic device (100) registers in 5G SA, and comprises:
one or more processors (110);
a memory (121); and
one or more computer programs, wherein the one or more computer programs are stored in the memory, and when the computer program is executed by the one or more processors (110), the electronic device (100) is enabled to perform the following steps:
when a Wi-Fi status changes, disabling (S801) a 5G SA mode of the electronic device (100) if Wi-Fi is available and a Wi-Fi signal strength is higher than a first threshold, and the electronic device (100) does not support VoNR, wherein Wi-Fi being available and the Wi-Fi signal strength being higher than the first threshold indicates a good Wi-Fi signal and the Wi-Fi being available and the Wi-Fi signal strength not being higher than the first threshold indicates a poor Wi-Fi signal; and
completing registration in a 4G mobile communications network (S802).

9. The electronic device (100) according to claim 8, wherein when the computer program is executed by the one or more processors (110), the electronic device (100) is enabled to perform the following step:
If a 5G cell on which the electronic device (100) currently camps is not a 5G cell whose 4G neighboring cell is abnormal, disabling the 5G SA mode of the electronic device (100).

10. The electronic device (100) according to claim 9, wherein when the computer program is executed by the one or more processors (110), the electronic device (100) is enabled to perform the following step:
if the electronic device (100) is in a target mode, disabling the 5G SA mode of the electronic device (100), wherein
the target mode is used to indicate that a user is insensitive to a mobile communications network in which the electronic device (100) registers.

11. The electronic device (100) according to claim 9 or 10, wherein when the computer program is executed by the one or more processors (110), the electronic device (100) is enabled to perform the following step:
if a new radio NR signal strength of the electronic device (100) is lower than a second threshold, disabling the 5G SA mode of the electronic device (100).

12. The electronic device (100) according to claim 8, wherein when the computer program is executed by the one or more processors (110), the electronic device (100) is enabled to perform the following step:
if the registration in the 4G mobile communications network does not succeed, restarting the 5G SA mode of the electronic device (100).

13. The electronic device (100) according to claim 12, wherein when the computer program is executed by the one or more processors (110), the electronic device (100) is enabled to perform the following step:
if the registration in the 4G mobile communications network does not succeed, marking a target 5G cell as a 5G cell whose 4G neighboring cell is abnormal, wherein
the target 5G cell is a 5G cell on which the electronic device (100) camps before disabling the 5G SA mode.

## Patentansprüche

1. Ein Kommunikationsverfahren, wobei das Verfahren von einer elektronischen Vorrichtung (100) durchgeführt wird, die elektronische Vorrichtung (100) meldet sich im 5G-Standalone-Modus (SA) an, und das Verfahren umfasst:
wenn sich der Wi-Fi-Status ändert, Deaktivieren (S609) des SG-SA-Modus der elektronischen Vorrichtung (100), falls Wi-Fi verfügbar ist und die Wi-Fi-Signalstärke höher als ein erster Schwellenwert ist und die elektronische Vorrichtung (100) Voice over New Radio (VoNR) nicht unterstützt, wobei eine verfügbare Wi-Fi-Verbindung und eine höhere Signalstärke als der erste Schwellenwert auf ein gutes Wi-Fi-Signal hindeuten und eine verfügbare Wi-Fi-Verbindung mit einer Signalstärke unterhalb des ersten Schwellenwerts ein schlechtes Wi-Fi-Signal anzeigt; und
Abschluss der Registrierung in einem 4G-Mobilfunknetz.

2. Verfahren gemäß Anspruch 1, wobei das Deaktivieren (S609) des SG-SA-Modus der elektronischen Vorrichtung (100) umfasst:
wenn eine 5G-Zelle, in der sich die elektronische Vorrichtung (100) aktuell befindet, nicht eine 5G-Zelle mit einer abnormalen 4G-Nachbarzelle ist, Deaktivieren (S609) des SG-SA-Modus der elektronischen Vorrichtung (100).

3. Verfahren gemäß Anspruch 2, wobei das Deaktivieren (S609) des SG-SA-Modus der elektronischen Vorrichtung (100) umfasst:
wenn sich die elektronische Vorrichtung (100) im Zielmodus befindet, Deaktivieren (S609) des SG-SA-Modus der elektronischen Vorrichtung (100), wobei
der Zielmodus dazu dient anzuzeigen, dass ein Benutzer gegenüber dem Mobilfunknetz, in dem sich die elektronische Vorrichtung registriert, unempfindlich ist.

4. Verfahren gemäß Anspruch 2 oder 3, wobei das Deaktivieren (S609) des SG-SA-Modus der elektronischen Vorrichtung (100) umfasst:
wenn die New Radio (NR)-Signalstärke der elektronischen Vorrichtung (100) niedriger als ein zweiter Schwellenwert ist, Deaktivieren (S609) des 5G-SA-Modus der elektronischen Vorrichtung (100).

5. Verfahren gemäß Anspruch 1, weiterhin umfassend:
wenn die Registrierung im 4G-Mobilfunknetz nicht erfolgreich ist, Neustart des 5G-SA-Modus der elektronischen Vorrichtung (100).

6. Verfahren gemäß Anspruch 5, weiterhin umfassend:
wenn die Registrierung im 4G-Mobilfunknetz nicht erfolgreich ist, Kennzeichnen einer Ziel-5G-Zelle als 5G-Zelle mit einer abnormalen 4G-Nachbarzelle, wobei
die Ziel-5G-Zelle jene 5G-Zelle ist, in der sich die elektronische Vorrichtung (100) vor dem Deaktivieren (S609) des SG-SA-Modus befindet.

7. Verfahren gemäß Anspruch 1, wobei nach Abschluss der Registrierung im 4G-Mobilfunknetz das Verfahren weiterhin umfasst:
Falls WLAN nicht verfügbar ist oder die WLAN-Signalstärke den ersten Schwellenwert nicht überschreitet, wird der 5G SA-Modus des elektronischen Geräts (100) neu gestartet.

8. Ein elektronisches Gerät (100), wobei das elektronische Gerät (100) im 5G SA registriert ist und Folgendes umfasst:
einen oder mehrere Prozessoren (110);
einen Speicher (121); und
ein oder mehrere Computerprogramme, wobei das eine oder die mehreren Computerprogramme im Speicher gespeichert sind und bei Ausführung des Computerprogramms durch den oder die Prozessoren (110) das elektronische Gerät (100) befähigt wird, die folgenden Schritte auszuführen:
Wenn sich der WLAN-Status ändert, Deaktivieren (S801) des 5G SA-Modus des elektronischen Geräts (100), wenn WLAN verfügbar ist und die WLAN-Signalstärke höher als ein erster Schwellenwert ist und das elektronische Gerät (100) VoNR nicht unterstützt, wobei die Verfügbarkeit von WLAN und eine WLAN-Signalstärke oberhalb des ersten Schwellenwerts ein gutes WLAN-Signal anzeigen und die Verfügbarkeit von WLAN bei einer Signalstärke unterhalb des ersten Schwellenwerts ein schwaches WLAN-Signal anzeigen; und
Abschluss der Registrierung in einem 4G-Mobilfunknetz (S802).

9. Das elektronische Gerät (100) gemäß Anspruch 8, wobei bei Ausführung des Computerprogramms durch den oder die Prozessoren (110) das elektronische Gerät (100) befähigt wird, folgenden Schritt auszuführen:
Wenn die 5G-Zelle, auf der das elektronische Gerät (100) aktuell eingebucht ist, keine 5G-Zelle ist, deren benachbarte 4G-Zelle abnormal ist, wird der 5G SA-Modus des elektronischen Geräts (100) deaktiviert.

10. Das elektronische Gerät (100) gemäß Anspruch 9, wobei bei Ausführung des Computerprogramms durch den oder die Prozessoren (110) das elektronische Gerät (100) befähigt wird, folgenden Schritt auszuführen:
Wenn sich das elektronische Gerät (100) im Zielmodus befindet, Deaktivieren des 5G SA-Modus des elektronischen Geräts (100), wobei
der Zielmodus zeigt an, dass der Benutzer gegenüber dem Mobilfunknetz, in dem sich das elektronische Gerät (100) registriert, unempfindlich ist.

11. Das elektronische Gerät (100) gemäß Anspruch 9 oder 10, wobei bei Ausführung des Computerprogramms durch den oder die Prozessoren (110) das elektronische Gerät (100) befähigt wird, folgenden Schritt auszuführen:
Wenn die NR-Signalstärke des elektronischen Geräts (100) unterhalb eines zweiten Schwellenwertes liegt, Deaktivieren des 5G SA-Modus des elektronischen Geräts (100).

12. Das elektronische Gerät (100) gemäß Anspruch 8, wobei bei Ausführung des Computerprogramms durch den oder die Prozessoren (110) das elektronische Gerät (100) befähigt wird, folgenden Schritt auszuführen:
Falls die Registrierung im 4G-Mobilfunknetz nicht erfolgreich ist, wird der 5G-SA-Modus des elektronischen Geräts (100) neu gestartet.

13. Das elektronische Gerät (100) gemäß Anspruch 12, wobei das elektronische Gerät (100) durch die Ausführung des Computerprogramms auf einem oder mehreren Prozessoren (110) dazu befähigt wird, folgenden Schritt auszuführen:
Falls die Registrierung im 4G-Mobilfunknetz nicht erfolgreich ist, wird eine Ziel-5G-Zelle als 5G-Zelle markiert, deren 4G-Nachbarzelle abnormal ist, wobei
die Ziel-5G-Zelle eine 5G-Zelle ist, auf welcher das elektronische Gerät (100) vor der Deaktivierung des SG-SA-Modus lagert.

## Revendications

1. Procédé de communication, ledit procédé étant mis en œuvre par un dispositif électronique (100), le dispositif électronique (100) étant enregistré en mode autonome 5G (SA), le procédé comprenant :
lorsqu'un état du Wi-Fi change, désactivation (S609) du mode 5G SA du dispositif électronique (100) si le Wi-Fi est disponible et que la puissance du signal Wi-Fi est supérieure à un premier seuil, et le dispositif électronique (100) ne prend pas en charge la voix sur nouvelle radio (VoNR), le fait que le Wi-Fi soit disponible et que la puissance du signal Wi-Fi soit supérieure au premier seuil indiquant un bon signal Wi-Fi, et le fait que le Wi-Fi soit disponible et que la puissance du signal Wi-Fi ne soit pas supérieure au premier seuil indiquant un signal Wi-Fi faible ; et
le fait de compléter l'enregistrement sur un réseau de communication mobile 4G.

2. Procédé selon la revendication 1, dans lequel la désactivation (S609) du mode 5G SA du dispositif électronique (100) comprend :
si une cellule 5G sur laquelle le dispositif électronique (100) camp actuellement n'est pas une cellule 5G dont la cellule voisine 4G est anormale, désactivation (S609) du mode 5G SA du dispositif électronique (100).

3. Procédé selon la revendication 2, dans lequel la désactivation (S609) du mode 5G SA du dispositif électronique (100) comprend :
si le dispositif électronique (100) est en mode cible, désactivation (S609) du mode 5G SA du dispositif électronique (100), dans lequel
le mode cible est utilisé pour indiquer qu'un utilisateur n'est pas sensible au réseau de communication mobile sur lequel le dispositif électronique s'enregistre.

4. Procédé selon la revendication 2 ou 3, dans lequel la désactivation (S609) du mode 5G SA du dispositif électronique (100) comprend :
si la puissance du signal NR (New Radio) du dispositif électronique (100) est inférieure à un second seuil, désactivation (S609) du mode 5G SA du dispositif électronique (100).

5. Procédé selon la revendication 1, comprenant en outre :
si l'enregistrement sur le réseau de communication mobile 4G n'aboutit pas, réactivation du mode 5G SA du dispositif électronique (100).

6. Procédé selon la revendication 5, comprenant en outre :
si l'enregistrement sur le réseau de communication mobile 4G n'aboutit pas, marquer une cellule 5G cible comme une cellule 5G dont la cellule voisine 4G est anormale, dans lequel
la cellule 5G cible est une cellule 5G sur laquelle le dispositif électronique (100) campe avant la désactivation (S609) du mode 5G SA.

7. Procédé selon la revendication 1, dans lequel après avoir complété l'enregistrement sur un réseau de communication mobile 4G, le procédé comprend en outre :
si le Wi-Fi est indisponible ou si la puissance du signal Wi-Fi n'est pas supérieure au premier seuil, redémarrer le mode 5G SA de l'appareil électronique (100).

8. Un appareil électronique (100), dans lequel l'appareil électronique (100) s'enregistre en 5G SA et comprend :
un ou plusieurs processeurs (110) ;
une mémoire (121) ; et
un ou plusieurs programmes informatiques, dans lesquels les uns ou plusieurs programmes informatiques sont stockés dans la mémoire, et lorsque le programme informatique est exécuté par le ou les processeurs (110), l'appareil électronique (100) peut effectuer les étapes suivantes :
lorsqu'un état Wi-Fi change, désactiver (S801) un mode 5G SA de l'appareil électronique (100) si le Wi-Fi est disponible et que la puissance du signal Wi-Fi est supérieure à un premier seuil, et que l'appareil électronique (100) ne prend pas en charge VoNR, où la disponibilité du Wi-Fi et la puissance du signal supérieure au premier seuil indique un bon signal Wi-Fi et la disponibilité du Wi-Fi avec une puissance du signal non supérieure au premier seuil indique un mauvais signal Wi-Fi ; et
terminer l'enregistrement dans un réseau de communications mobiles 4G (S802).

9. L'appareil électronique (100) selon la revendication 8, dans lequel, lorsque le programme informatique est exécuté par le ou les processeurs (110), l'appareil électronique (100) peut effectuer l'étape suivante :
si une cellule 5G sur laquelle l'appareil électronique (100) est actuellement connecté n'est pas une cellule 5G dont la cellule voisine 4G est anormale, désactiver le mode 5G SA de l'appareil électronique (100).

10. L'appareil électronique (100) selon la revendication 9, dans lequel, lorsque le programme informatique est exécuté par le ou les processeurs (110), l'appareil électronique (100) peut effectuer l'étape suivante :
si l'appareil électronique (100) est dans un mode cible, désactiver le mode 5G SA de l'appareil électronique (100), où
le mode cible est utilisé pour indiquer qu'un utilisateur est insensible au réseau de communications mobiles dans lequel l'appareil électronique (100) s'enregistre.

11. L'appareil électronique (100) selon la revendication 9 ou 10, dans lequel, lorsque le programme informatique est exécuté par le ou les processeurs (110), l'appareil électronique (100) peut effectuer l'étape suivante :
si la puissance du signal NR (New Radio) de l'appareil électronique (100) est inférieure à un second seuil, désactiver le mode 5G SA de l'appareil électronique (100).

12. L'appareil électronique (100) selon la revendication 8, dans lequel, lorsque le programme informatique est exécuté par le ou les processeurs (110), l'appareil électronique (100) peut effectuer l'étape suivante :
si l'enregistrement sur le réseau de communication mobile 4G n'aboutit pas, redémarrer le mode 5G SA de l'appareil électronique (100).

13. L'appareil électronique (100) selon la revendication 12, dans lequel, lorsque le programme informatique est exécuté par un ou plusieurs processeurs (110), l'appareil électronique (100) est capable d'effectuer l'étape suivante :
si l'enregistrement sur le réseau de communication mobile 4G n'aboutit pas, marquer une cellule 5G cible comme une cellule 5G dont la cellule voisine 4G est anormale, où
la cellule 5G cible est une cellule 5G sur laquelle l'appareil électronique (100) est campé avant de désactiver le mode 5G SA.
